# EUROPEAN PATENT APPLICATION

(11) **EP 1 512 714 A1**
(43) Date of publication of application: **09.03.2005**
(21) Application number: 03077669.4
(22) Date of filing: 27.08.2003
(51) Int. Cl.: C08J 9/28, C08J 9/00

(54) **A method for producing low density, polyolefin foamed article**

(71) Applicant: DSM IP Assets B.V., 6411 TE Heerlen (NL)
(72) Inventor: Kirschbaum, Robert, 6141 LH Limbricht (NL); Tan, Jasmine Peck Leng, 6132 DB Sittard (NL); Simmelink, Joseph Arnold Paul Maria, 6137 AH Sittard (NL)
(74) Representative: Mooij, Johannes Jacobus

(57) **Abstract**

The invention relates to a method for producing low density, polyolefin foamed article, comprising:
- Forming a solution of a polyolefin in a first solvent at a temperature above the dissolution temperature,
- Shaping the solution to a 3-dimensional solvent containing article,
- Converting the solvent containing article into a gel article by cooling the article to below the gelation temperature of the solution,
- Supercritical extraction of the solvent from the gel article with a supercritical fluid, as well as to a polyolefin foamed article, comprising nanotubes.

## Description

### INTRODUCTION.

This invention relates to a method for making a low density, polyolefin foamed article, and more particularly, to a method for producing a polyolefin foamed article, which can achieve a relatively wide range of material densities and a large number of extremely small voids or cells per unit volume therein. The invention further relates to fiber reinforced foamed articles and methods for the production thereof.

### BACKGROUND OF THE INVENTION.

Methods for making conventional foamed materials, such as foamed polymer plastic materials, have been well known for many years. Standard techniques for such purpose normally use chemical or physical blowing agents. The use of chemical agents is described, for example, by Lacallade in the text, "Plastics Engineering," Vol. 32, June 1976 which discusses various chemical blowing agents, which agents are generally low molecular weight organic compounds which decompose at a critical temperature and release a gas (or gases) such as nitrogen, carbon dioxide, or carbon monoxide. Techniques using physical agents include the introduction of a gas as a component of a polymer charge or the introduction of gases under pressure into molten polymer. Injection of a gas into a flowing stream of molten plastic is described, for example, in U.S. Pat. No. 3,796,779 issued to Greenberg on Mar. 12, 1976. Such earlier used and standard foaming processes produce voids or cells within the plastic materials which are relatively large, e.g., on the order of 100 microns, or greater, as well as relatively wide ranges of void fraction percentages, e.g., from 20%-90% of the parent material. The number of voids per unit volume is relatively low and often there is a generally non-uniform distribution of such cells throughout the foamed material. Such materials tend to have relatively low mechanical strengths and toughness.

In order to improve the mechanical properties of such standard cellular foamed materials, a microcellular process was developed for manufacturing foamed plastics having greater cell densities and smaller cell sizes. Such a process is described, for example, in U.S. Pat. No. 4,473,665 issued on Sep. 25, 1984 to J. E. Martini-Vredensky et al. The improved technique provides for presaturating the plastic material to be processed with a uniform concentration of a gas under pressure and the provision of a sudden induction of thermodynamic instability in order to nucleate a large number of cells. For example, the material is presaturated with the gas and maintained under pressure at its glass transition temperature. The material is suddenly exposed to a low pressure to nucleate cells and promote cell growth to a desired size, depending on the desired final density, thereby producing a foamed material having microcellular voids, or cells, therein. The material is then quickly further cooled, or quenched, to maintain the microcellular structure.

Such a technique tends to increase the cell density, i.e., the number of cells per unit volume of the parent material, and to produce much smaller cell sizes than those in standard cellular structures. The microcellular process described tends to provide cell sizes that are generally smaller than the critical sizes of flaws that preexist in polymers so that the densities and the mechanical properties of the materials involved can be controlled without sacrificing the mechanical properties of some polymers, such as the mechanical strength and toughness of the polymer. The resulting microcellular foamed materials that are produced, using various thermoplastics and thermosetting plastics, tend to have average cell sizes in the range of 3 to 10 microns, with void fractions of up to 50% of the total volume and maximum cell densities of about one billion (10⁹) voids per cubic centimeter of the parent material.

Further work in producing microcellular foamed plastic material is described in U.S. Pat. No. 4,761,256 issued on Aug. 2, 1988 to Hardenbrook et al. As set forth therein, a web of plastic material is impregnated with an inert gas and the gas is diffused out of the web in a controlled manner. The web is reheated at a foaming station to induce foaming, the temperature and duration of the foaming process being controlled prior to the generation of the web to produce the desired characteristics. The process is designed to provide for production of foamed plastic web materials in a continuous manner. The cell sizes in the foamed material appear to lie within a range from 2 to 9 microns in diameter.

Even smaller cell sizes were obtained by saturating a polymerized plastic material with a supercritical fluid as described in U.S. Pat No. 5,158,986 issued on Oct. 27, 1992 to Sung et al. After the formation of a fluid saturated polymer material, temperature and pressure are released, thus causing a thermodynamic instability, so that foaming takes place in the material. With this method a PVC foam could be obtained with an average cell size of about 0.8 microns.
A disadvantage of the method described in US 5,158,986 that the foaming caused by the thermodynamic instability is hard to control and that it takes a long time to saturate the polymeric plastic material.

U.S. Pat. No. 5,670,102 issued on Feb. 6, 2001 to Stiller et al. describes a similar method of saturating a polymer with a supercritical fluid as described in U.S. Pat. No. 5,158,986. for a number of different polymers, under which polyethylene. Once a polymer has reached an equilibrium saturation with the supercritical fluid, required for fully foamed articles, the pressure vessel is rapidly vented at the processing temperature, thus allowing the dissolved the supercritical fluid in the softened polymer to expand the polymer and producing cells. A rapid rate of venting is preferable to achieve the maximum in foaming action. For polyethylene either ethylene at 109°C or carbon dioxide were used as supercritical fluids.

Saturation times of several hours were required to obtain a degree of saturation which after release of the pressure by venting the reaction vessel resulted in foams with a density of about 0.2 g/cm³.

EP-A-0301622 issued on Feb. 1, 1989 to DSM describes a process for producing foams of ultra high molecular weight polyethylene, by foaming a solution of a polyolefin of ultrahigh molecular weight in a solvent with the use of a physical or chemical blowing agent or of an inert gas blown into the solution, and cooling of the resulting foam to a temperature below the gelling temperature of the polyolefin. Extracting the solvent with acetone subsequently generates the foam.

It is desirable to significantly reduce the overall time of the foaming process so as to increase the rate of production of the foamed material or to make larger three dimensional articles in a short time.

### BRIEF SUMMARY OF THE INVENTION.

The method of this invention for producing low density, polyolefin foamed article, comprises:
- Forming a solution of a polyolefin in a first solvent at a temperature above the dissolution temperature,
- Shaping the solution to a 3-dimensional solvent containing article,
- Converting the solvent containing article into a gel article by cooling the article to below the gelation temperature of the solution,
- supercritical extraction of the solvent from the gel article with a supercritical fluid.

A preferred polyolefin comprises polyethylene with a weight-average molecular weight of at least 5 x 10⁵ g/mol. The advantage of a polyolefin with such a high molecular weight is, that a foam with a smaller pore size can be obtained, than with a polyolefin with a molecular weight of below 5 x 10⁵ g/mol.

More specifically, the invention is directed to a method, wherein the supercritical fluid is carbon dioxide, since carbon dioxide is non flammable, and nontoxic,as well as being relatively inexpensive.

In order to reinforce the foam obtained with the method of the invention nanotubes are added to the solution. Particular preferable are nanotubes which are single or double wall carbon nanotubes.

In order to improve the dispersion and therewith the required concentration of the carbon nanotubes in the solution, the carbon nanotubes may be functionalized.

An even stronger foam is obtained when the foam is stretched in 3 dimensions. This can be done by rapid release of the pressurized supercritical fluid or by adding a blowing agent to the supercritical fluid.

The invention further comprises polyolefin foamed article, comprising nanotubes.

### DESCRIPTION OF THE PREFERRED EMBODYMENTS.

In accordance with the invention a low density, polyolefin foamed article, is formed by:
- forming a solution of a polyolefin in a first solvent at a temperature above the dissolution temperature,
- shaping the solution to a 3-dimensional solvent containing article,
- converting the solvent containing article into a gel article by cooling the article to below the gelation temperature of the solution,
- supercritical extraction of the solvent from the gel article with a supercritical fluid.

The polyolefin in this invention can be any polyolefin as e.g. polyethylene, polypropylene, or polybutadiene of any molecular weight. The polyolefins from which the foams according to the invention are produced, are preferably polyethylenes which can contain considerable quantities of one or more other alkenes copolymerizable therewith, such as propylene, butylene, pentene, hexene, 4-methylpentene and octene. However, they can also consist of other polyolefins, such as propylene homopolymers and copolymers, and the polyolefins used can also contain considerable quantities of one or more other polymers, especially 1-alkene polymers.

Preferably the polyolefin of this invention is a polyolefin of ultrahigh molecular weight, i.e. weight average molecular weight of 5 x 10⁵ g/mol and higher.

The advantage of a polyolefin with an ultra high molecular weight is, that a foam with a smaller pore size can be obtained, than with a polyolefin with a molecular weight of below 5 x 10⁵ g/mol.

For carrying out the foaming, these polyolefin starting materials are dissolved in a solvent. The solvents used can be the halogenated and non-halogenated hydrocarbons known for polyolefins, especially aliphatic, cycloaliphatic and aromatic hydrocarbons having boiling points of at least 80°C, such as paraffins, toluene, xylenes, tetralin, decalin, C₉-C₁₂-alkanes and petroleum fractions.

It is also possible to use solvents which are solid at room temperature but liquid at the dissolution temperature such as paraffin waxes. Preferably, the dissolution is effected at a temperature between 160 and 200°C, decalin being used as a particularly preferred solvent. The dissolution temperature depends on the particular polyolefin employed, the solvent used, the quantity to be dissolved and the equipment used for dissolution.

In an advantageous manner the dissolution is effected in an extruder, especially in a twin-screw extruder, which is fed by a suspension of the polyolefin to be dissolved in the particular solvent, one or more static mixers preferably being also provided downstream of the extruder. The residence time in the extruder is advantageously between 1 and 25 minutes and especially between 3 and 15 minutes. The polyolefin goes into solution, assisted by the kneading effect in the extruder and in the static mixers which may be provided down-stream.

Shaping the solution to a 3-dimensional solvent containing article can be done, by bringing the solution in a mould. Methods of shaping of polyolefin solutions into one or two dimensional shapes, like fiber or films are described in e.g. U.S. Pat. No. 4,668,717.

Subsequently the solvent containing article is converted into a gel article by cooling the article to below the gelation temperature of the solution. The gelation temperature depends on, inter alia, the solvent and generally virtually corresponds with the said dissolving temperature.

The last step in the method of the invention is supercritical extraction of the solvent from the gel article with a supercritical fluid. Gases that are suitable supercritical fluids and are useful in practicing this invention include, but are not limited to, carbon dioxide, nitrous oxide, ethylene, ethane, tetrafluoroethylene, perfluoroethane, tetrafluoromethane, trifluoromethane, 1,1-difluoroethylene, trifluoroamide oxide, cis-difluorodiazine, trans-difluorodiazine, nitrogen chloride difluoride, phosphorous trideuteride, dinitrogen tetrafluoride, ozone, phosphine, nitrosyl fluoride, nitrogen trifluoride, deuterium chloride, hydrogen chloride, xenon, sulfur hexafluoride, fluoromethane, perfluoroethane, tetrafluoroethene, pentafluoroethane, tetrafluoromethane, trifluoromethane, 1,1-difluoroethene, ethyne, diborane, tetrafluorohydrazine, silane, silicon tetrafluoride, germanium tetrahydride, boron trifluoride, carbonyl fluoride, chlorotrifluoromethane, bromotrifluoromethane and vinyl fluoride. The preferred gases include carbon dioxide, nitrous oxide, ethylene, ethane, tetrafluoroethylene, perfluoroethane, tetrafluoromethane, trifluoromethane, and 1,1-difluoroethylene. The more preferred gas is carbon dioxide since carbon dioxide is non flammable, and nontoxic,as well as being relatively inexpensive.

In another embodiment two solvents are applied at the same time, but such that one solvent can be brought under supercritical condition: Ultra high molecular weight polyolefin is solved in a conventional solvent like decalin, or hexane, or any other suitable solvent. The solution is made at a temperature above the melting temperature of the polyolefin. This solution is brought in a pressure vessel that can be charged with a supercritical solvent, still above the melting temperature of the polyolefin. Supercritical CO2 is a preferred second solvent. After some residence time, the supercritical solvent, and the conventional solvent, and the polyolefin are homogeneously mixed, whereby the entire pressure vessel is filled with the mixture. A mechanical mixing device can reduce the required residence time.

After a residence time that is sufficient to reach a homogeneous mixture, the supercritical mixture is cooled to a temperature significantly below the melting or gelation temperature of the polyolefin, but the temperature and pressure remain at values such that the supercritical solvent remains supercritical. Then the pressure is released slowly at this low temperature, thus releasing the second solvent that was supercritical, but keeping most of the first solvent in the vessel. The pressure vessel is than opened. The gel is removed and cut to shape. Subsequently the shaped article is put in a pressure vessel, being charged with the same or another supercritical solvent at low temperature. Continuous refreshing of the supercritical solvent is than applied in order to purge the first non-critical solvent out of the product, such that it finally consists of a polyolefin or polyolefin/nanotubes mixture only.

Addition of up to 10% by weight (based on the weight of the polyolefin) of carbon nanotubes improves the mechanical properties of the final foam product, and stabilizes the foam. Moreover, the use of a suitable supercritical solvent may promote the dispersion of the nanotubes. The nanotubes are preferably modified in such a way that compatibility with one or more of the other constituents of the mixture is improved

A variation of this procedure is that the cooling down is not only done to a temperature below the gelation temperature, but also down to a temperature at which the second solvent is not supercritical anymore, e.g. to room temperature, subsequently followed by a further slow release of pressure down to ambient pressure.

The pressure vessel can be opened then and the rest of the second solvent can be evaporated. The remaining gel containing the first solvent can be used for all kind of gel-technology operations, including uni-axial or bi-axial drawing, or to a purging step with supercritical solvent in order to remove the first solvent and create a foam with an extreme cell density.

In still another embodiment, the supercritical mixture of polyolefin, first solvent and supercritical solvent and optionally nanotubes is flashed through a small nozzle, in a room with low pressure and low temperature, thus creating numerous very small porous entangled gel filaments that can be processed further to a variety of products. In this latter case, the first solvent may be the same as the second solvent, being the supercritical solvent. Complete evaporation will anyhow be preceded by gelation, thus yielding a dried gel at the end. Again, this gel is a starting point for a multitude of products based on gel-technology. Especially super draw ability is a property that can be utilized favorably. The fast cooling related to the flashing process causes a fine crystalline material structure and prevents or minimizes phase separation of nano tubes and polyolefin.

In order to improve the compression strength of the foam of the invention several nanofibers can be added. The term nanofibers refers to various fibers, particularly carbon fibers, having very small diameters including fibrils, whiskers, nanotubes, buckytubes, etc. Such structures provide significant surface area when incorporated into a structure because of their size and shape. Moreover, such fibers can be made with high purity and uniformity.

Preferably, the nanofiber used in the present invention has a diameter less than 1 micron, preferably less than about 0.5 micron, and even more preferably less than 0.1 micron and most preferably less than 0.05 micron. Nanotubes can be made of carbon, silicon, nitrogen or mixtures thereof. Preferably, the nanotubes are carbon nanotubes. Prefered carbon nanotubes used in the present invention have a diameter less than 30 nm, preferably less than about 10 nm, and even more preferably less than 3 nm. The nanotubes are most preferably single or double wall carbon nanotubes. Carbon nanotubes are commercial available from Nanoledge, Carbon Nanotegnologies Inc., Rosseter Holding Ltd., or Nanocyl.

In order to improve the dispersion of the nanotubes in the solution and therefore also in the foam, the nanotubes can be functionalised. This can be done by treatment with hydrogen peroxide, chlorate, sulphuric acid and/or nitric acid in order top make them more compatible with polar solvents. Other methods of functionalization are fluorination as described by E.T. Mickelson et. al. in Chemical Physics Letters 296 (1998) 188-194, or alkylation as described by P.J. Boul et. al. in Chem. Physics Letters 310 (1999) 367-372.

An advantage of functionalised nanotubes is the improved interaction with the polyolefin of the foam.

Carbon nanotubes in the foam according to the invention exhibit various electrical properties, varying from good transfer of electrical current to insulator. Usual nanotube production processes produce mixtures of those various properties. The average effect is electrical conduction. Due to their extreme aspect ratio, electrical conductive foams can be made with rather low concentrations of nanotubes.

Nanotubes are also good thermal conductors, so thermal insulation may be somewhat reduced by adding nanotubes to an aerogel. However, this reduction remains limited due to the low density of the foam and the low concentration of tubes that can be chosen.

The improvements obtainable by reinforcement of foams with nanotubes create the possibility of making ultra light materials with acceptable mechanical properties like strength and toughness. Extreme temperature resistance and good thermal insulation can be obtained. This opens application areas in technology that were impossible or extremely troublesome so far. Spacecraft technology, fire fighting technology, blast mitigation and shock absorption are examples of such possibilities. The electrical conductivity may add EMI-shielding to the list of favourable properties.

The invention further relates to polyolefin foamed article, comprising nanotubes obtained with the method of the invention.

## Claims

1. A method for producing low density, polyolefin foamed article, comprising:
• Forming a solution of a polyolefin in a first solvent at a temperature above the dissolution temperature,
• Shaping the solution to a 3-dimensional solvent containing article,
• Converting the solvent containing article into a gel article by cooling the article to below the gelation temperature of the solution,
• Supercritical extraction of the solvent from the gel article with a supercritical fluid.

2. Process according to claim 1, wherein the polyolefin comprises polyethylene with a weight-average molecular weight of at least 5 x 10⁵ g/mol.

3. Process according to claim 1, wherein the supercritical fluid is carbon dioxide.

4. Process according to claim 1, wherein nanotubes are added to the solution.

5. Process according to claim 2, wherein the nanotubes are single or double wall carbon nanotubes.

6. Process according to claim 2 or 3, wherein the carbon nanotubes are functionalized.

7. Process according to claim 1, wherein the aerogel is stretched in 3 dimensions.

8. Process according to claim 1, wherein the carbon dioxide comprises a blowing agent.

9. Polyolefin foamed article, comprising nanotubes.
